# EUROPÄISCHE PATENTANMELDUNG

(11) **EP 0 969 275 A2**
(43) Veröffentlichungstag der Anmeldung: **05.01.2000**
(21) Anmeldenummer: 99110340.9
(22) Anmeldetag: 28.05.1999
(51) Int. Cl.: G01M 17/013

(54) **Vorrichtung zur Vermessung von Radachsen von Kraftfahrzeugen**

(30) Priorität: 30.06.1998 DE 19829189
(71) Anmelder: ROBERT BOSCH GMBH, 70442 Stuttgart (DE)
(72) Erfinder: Klausner, Markus, Dr., Pittsburgh, 15213PA (US); Grimm, Wolfgang, Dr., 71229 Leonberg (DE)

(57) **Zusammenfassung**

Es wird eine Vorrichtung (12) zur Vermessung von Radachsen (13) von Kraftfahrzeugen (10) vorgeschlagen. Die Vorrichtung (12) besteht aus mindestens einer Sender-/Empfängereinheit (14) und einem Rechner (16) zur Auswertung der Signale, die von der Sender-/Empfängereinheit (14) gemessen werden. Die Sender-/Empfängereinheiten (14) werden an geometrisch bestimmten Punkten (20, 24) der Karosserie (22) angebracht. Dadurch ist die exakte Lage der Sender-/Empfängereinheiten (14) schon bekannt und muß nicht umständlich ermittelt werden. Beispielsweise durch optische Triangulation kann dann die genaue Lage und Ausrichtung jedes einzelnen Rades (18) und somit der Radachsen (13) bestimmt werden, ohne daß mittels zusätzlicher Einrichtungen die Positionen der Sender-/Empfängereinheiten (14) bestimmt werden müssen. Die Vorrichtung (12) ist deshalb einfach im Aufbau und arbeitet dennoch präzise.

## Beschreibung

### Stand der Technik

Die Erfindung geht aus von einer Vorrichtung zur Vermessung von Radachsen von Kraftfahrzeugen nach der Gattung des Hauptanspruchs. Es ist bereits eine Vorrichtung zur Vermessung von Radachsen mit vier Sender-/Empfängereinheiten bekannt, die an den Rädern eines Kraftfahrzeugs befestigbar sind und mit einem Rechner zur Auswertung der von den Sender-/Empfängereinheiten gemessenen Signale. Da die Sender-/Empfängereinheiten am Kraftfahrzeug befestigbar sind, müssen durch zusätzliche, Kosten verursachende Einrichtungen die Positionen der Sender-/Empfängereinheiten zueinander bestimmt werden. Für die Befestigung der Sender-/Empfängereinheiten an den Rädern sind spezielle Halterungsvorrichtungen notwendig, deren exakte Ausrichtung sehr umständlich sein kann. Die absoluten Positionen und die relativen Winkelstellungen der Räder und somit der Radachsen untereinander können zwar genau erfaßt werden, nicht jedoch deren Position und Winkelstellungen in Bezug auf die Karosserie. Da vier miteinander verkettete Sender-/Empfängereinheiten nötig sind, ist der Einsatz der Vorrichtung bei Kraftfahrzeugen die mehr als vier Räder aufweisen, sehr umständlich, da dann mehrere Messungen durchgeführt werden müssen, um alle Radachsen zu vermessen.

### Vorteile der Erfindung

Die erfindungsgemäße Vorrichtung zur Vermessung von Radachsen von Kraftfahrzeugen mit den kennzeichnenden Merkmalen des Hauptanspruchs hat demgegenüber den Vorteil, daß keine zusätzlichen Einrichtungen zur Bestimmung der Positionen der Sender-/Empfängereinheiten zueinander benötigt werden, da sie an Punkten angebracht werden, deren Lage bereits bekannt ist. Ein weiterer Vorteil ist, daß die absoluten Positionen und die relativen Winkelstellungen der Radachsen in Bezug zur Karosserie erfaßt werden und somit auch deren absolute Positionen und relative Winkelstellungen untereinander. Als zusätzlicher Vorteil ist anzusehen, daß mit weniger als vier Sender-/Empfängereinheiten gearbeitet werden kann. Sogar mit einer Sender-/Empfängereinheit können alle Radachsen eines Fahrzeuges vermessen werden. Dennoch kann mit einer beliebiger Anzahl von Sender-/Empfängereinheiten gearbeitet werden. Weitere Vorteile und vorteilhafte Weiterbildungen ergeben sich durch die in den Unteransprüchen und der Beschreibung angeführten Maßnahmen.

### Zeichnung

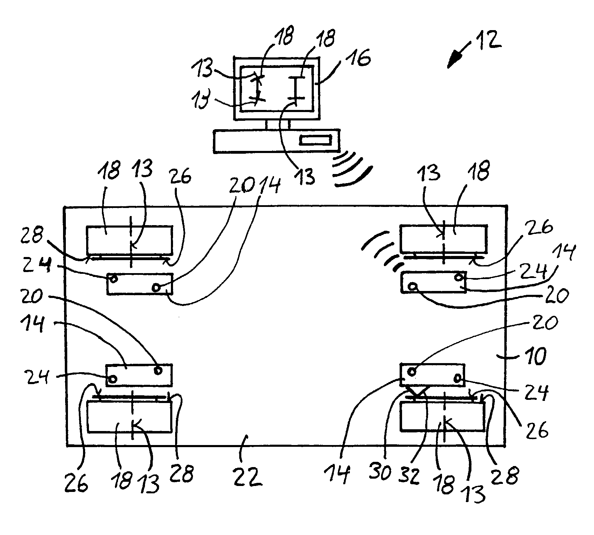

Ein Ausführungsbeispiel der Erfindung ist in der Zeichnung dargestellt und in der nachfolgenden Beschreibung näher erläutert.

### Beschreibung

In der einzigen Figur ist ein Kraftfahrzeug 10 von unten sowie eine Vorrichtung 12 zur Vermessung von Radachsen 13 von Kraftfahrzeugen 10 gezeigt. Die Vorrichtung 12 ist transportabel und bei einem fahrenden Kraftfahrzeug 10 einsetzbar. Sie besteht aus vier am Kraftfahrzeug 10 befestigbaren Sender-/Empfängereinheiten 14 sowie einem Rechner 12 zur Auswertung der von den Sender-/Empfängereinheiten 14 gemessenen Signale. Das Kraftfahrzeug 10 weist vier Räder 18 auf, d.h., daß für jedes zu vermessende Rad 18 eine Sender-/Empfängereinheit 14 vorgesehen ist. Jede Sender-/Empfängereinheit 14 ist in der Nähe eines Rades 18 an wenigstens einem geometrisch bestimmten Punkt 20 der Karosserie 22 des Kraftfahrzeuges 10 befestigbar. Wegen der Ausrichtung der Sender-/Empfängereinheiten 14 ist es jedoch vorteilhaft, jede Sender-/Empfängereinheit 14 an einem weiteren geometrisch bestimmten Punkt 24 der Karosserie 22 zu befestigen. An jedem Kraftfahrzeug 10 befinden sich geometrisch bestimmte Punkte 20, 24 in Form von mechanisch codierten Meß- oder Vermessungspunkten zur Bestimmung der Fahrzeuggeometrie, beispielsweise nach Unfällen. Da die Lage und die Ausrichtung der Punkte 20, 24 genau definiert und bekannt ist, ist auch die Lage und die Ausrichtung der Sender-/Empfängereinheiten 14 eindeutig bestimmt.

An den zu vermessenden Rädern 18 sind Reflektoren 26 befestigbar, die mit den Sender-/Empfängereinheiten 14 zusammenwirken. Diese Reflektoren 26 sind vorteilhafterweise an den Radinnenseiten 28 befestigbare Spiegel. Aus diesem Grund arbeiten die Sender-/Empfängereinheiten 14 im vorliegenden Ausführungsbeispiel nach dem Prinzip der optischen Triangulation.

Grundlage der optischen Triangulation ist, daß ein Dreieck durch eine bekannte Seite und zwei bekannte Winkel geometrisch bestimmbar ist. Im vorliegenden Fall ist die Entfernung zwischen dem Sender und dem Empfänger der Sender-/Empfängereinheiten 14 bekannt. Der Sender und der Empfänger stellen zwei Eckpunkte einer Seite des Dreiecks dar, die somit bekannt ist. Bei einer bestimmten Winkelstellung von Sender und Empfänger wird ein vom Sender ausgestrahlter Strahl vom Reflektor 28 so reflektiert, daß er vom Empfänger empfangen wird. Dadurch sind also die zwei benötigten Winkel des Dreiecks bestimmt. Durch bekannte Rechenschritte lassen sich dann die restlichen Seiten und der verbleibende Winkel berechnen. Dadurch läßt sich aber auch die Lage des dritten Eckpunktes, d. h. des Reflektors 28 ermitteln. Da auch die Entfernung des Reflektors 28 zum Rad 18 bekannt ist, ist auch die Position des Rads 18 genau bestimmbar.

Im Bereich rechts unten in der Figur ist symbolisch dargestellt, wie ein Strahl 30 von der dortigen Sender-/Empfängereinheit 14 gesendet wird, am Reflektor 26 reflektiert wird und der reflektierte Strahl 32 von der Sender-/Empfängereinheit 14 wieder empfangen wird. Neben einem optischen Verfahren wie der Triangulation, können jedoch auch andere Verfahren verwendet werden, beispielsweise solche, die mit Ultraschall oder elektromagnetischen Wellen arbeiten. Die somit von den Sender-/Empfängereinheiten 14 gemessenen Signale werden vorteilhafterweise drahtlos zum Rechner 16 übertragen. Dort erfolgt die Auswertung der Signale. Je nach verwendetem Verfahren wird mit den Laufzeiten der Strahlen 30, 32 und/oder mit deren Frequenzen gearbeitet. Hieraus läßt sich dann exakt die Position eines Rades 18 zu einer Sender-/Empfängereinheit 14 ermitteln. Bei einer Vermessung muß jedes Rad 18 mindestens eine Umdrehung durchführen. Dadurch lassen sich dann Lage und Ausrichtung bzw. Winkelstellung der Räder 18 ermitteln. Da die Stellung der Räder 18 zu den Radachsen 13 genau bekannt ist, läßt sich somit auch die Ausrichtung und die Winkelstellung der Radachsen 13 in bezug zur Karosserie und untereinander exakt ermitteln.

Ein Vorteil der erfindungsgemäßen Vorrichtung 12 ist, daß die Anzahl der verwendeten Sender-/Empfängereinheiten 14 entsprechend den jeweiligen individuellen Bedürfnissen einer Vermessung gewählt werden kann. Da eine Sender-/Empfängereinheit 14 an einem zwei oder mehr geometrisch bestimmten Punkten 20, 24 an der Karosserie 22 angebracht werden kann, ist es beispielsweise denkbar, mit einer Sender-/Empfängereinheit 14 nacheinander die einzelnen Räder 18 und somit die einzelnen Radachsen 13 eines Kraftfahrzeugs 10 zu vermessen, was eine Kostenersparnis bezüglich der Sender-/Empfängereinheit 14 bedeutet. Es ist aber auch möglich, an Kraftfahrzeugen mit mehr als zwei Radachsen 13, beispielsweise einem LKW mit drei Radachsen 13 und sechs Rädern 18, sechs Sender-/Empfängereinheiten 14 zu verwenden. Somit kann die Dauer der Messung stark reduziert werden.

## Patentansprüche

1. Vorrichtung (12) zur Vermessung von Radachsen (13) von Kraftfahrzeugen (10) mit mindestens einer, am Kraftfahrzeug (10) befestigbaren Sender-/Empfängereinheit (14) und einem Rechner (16) zur Auswertung der von der mindestens einen Sender-/Empfängereinheit (14) gemessenen Signale, dadurch gekennzeichnet, daß die mindestens eine Sender-/Empfängereinheit (14) an wenigstens einem geometrisch bestimmten Punkt (20, 24) der Karosserie (22) der Kraftfahrzeuge (10) befestigbar ist.

2. Vorrichtung (12) nach Anspruch 1, dadurch gekennzeichnet, daß die mindestens eine Sender-/Empfängereinheit (14) an zwei geometrisch bestimmten Punkten (20, 24) der Karosserie (22) befestigbar ist.

3. Vorrichtung (12) nach Anspruch 1 oder 2, dadurch gekennzeichnet, daß an den zu vermessenden Rädern (18) Reflektoren (26) befestigbar sind, die mit der mindestens einen Sender-/Empfängereinheit (14) zusammenwirken.

4. Vorrichtung (12) nach Anspruch 3, dadurch gekennzeichnet, daß die Reflektoren (26) an den Radinnenseiten (28) befestigbare Spiegel sind.

5. Vorrichtung (12) nach Anspruch 4, dadurch gekennzeichnet, daß die Sender-/Empfängereinheiten (14) nach dem Prinzip der optischen Triangulation arbeiten.

6. Vorrichtung (12) nach einem der Ansprüche 1 bis 5, dadurch gekennzeichnet, daß die gemessenen Signale drahtlos übertragbar sind.

7. Vorrichtung (12) nach einem der Ansprüche 1 bis 6, dadurch gekennzeichnet, daß für jedes zu vermessende Rad (18) eine Sender-/Empfängereinheit (14) vorgesehen ist.

8. Vorrichtung (12) nach einem der Ansprüche 1 bis 7, dadurch gekennzeichnet, daß die Vorrichtung (12) bei einem fahrenden Kraftfahrzeug (10) einsetzbar ist.
